# DEMANDE DE BREVET EUROPEEN

(11) **EP 2 572 920 A1**
(43) Date de publication de la demande: **27.03.2013**
(21) Numéro de dépôt: 12185120.8
(22) Date de dépôt: 20.09.2012
(51) Int. Cl.: B60K 15/05, B60L 11/18, B60L 11/12, E05C 7/06

(54) **Véhicule hybride comportant des trappes pour rechargement à ouvertures sélectives**

(30) Priorité: 20.09.2011 FR 1158370
(71) Demandeur: PEUGEOT CITROËN AUTOMOBILES SA, 78140 Velizy-Villacoublay (FR)
(72) Inventeur: Deland Huy, Eric, 78120 RAMBOUILLET (FR)

(57) **Abrégé**

Véhicule hybride (1) comprenant un moteur thermique associé à un réservoir de carburant présentant un goulot (6) pour son remplissage, un moteur électrique associé à une batterie reliée à un socle de connexion (7) pour sa recharge en énergie électrique par raccordement avec une prise mobile, ledit goulot (6) de réservoir et ledit socle de connexion (7) étant chacun accessible depuis l'extérieur du véhicule (1) au moyen de deux trappes (3, 5) d'accès distinctes, le véhicule (1) étant caractérisé en ce que les trappes (3) (5) (53) (55)d'accès au goulot (6) du réservoir et au socle de connexion (7) sont disposées adjacentes l'une à l'autre, de façon qu'un moyen mécanique (9) (10) de blocage solidaire de la trappe (3) (5) lors de son ouverture provoque le blocage de l'autre trappe (3) (5) afin d'empêcher son ouverture et inversement.

## Description

L'invention se situe dans le domaine des véhicules de type hybride comprenant à la fois un moteur thermique et un moteur électrique pour sa propulsion. Plus précisément, l'invention concerne le rechargement en électricité et/ou en carburant de tels véhicules.

Sur les véhicules de type hybride, le socle de connexion pour le branchement d'un dispositif de recharge en énergie électrique de la batterie est souvent disposé à l'avant du véhicule, comme par exemple dans le document EP2116405, ou encore à l'opposé de l'habitacle par rapport au goulot de remplissage du réservoir de carburant.

Pour minimiser les modifications engendrées par la présence d'une trappe d'accès aux moyens de recharge de la batterie sur la stylique des pièces de carrosserie, il a été recherché une implantation de ladite trappe qui soit à proximité de la trappe d'accès au réservoir de carburant. On notera que, pour des raisons de sécurité, il est préférable de ne pas effectuer les opérations de rechargement en énergie électrique simultanément aux opérations de remplissage du réservoir en carburant. C'est pourquoi cette implantation de l'accès au réservoir de carburant et à la prise de recharge doit s'accompagner de moyens pour dissuader ou empêcher leur utilisation en simultané. Différents systèmes ont déjà été proposés à cet effet dans l'art antérieur.

Par exemple, le document US20100133024 présente un système de sécurité ne permettant pas l'ouverture de la trappe d'accès au réservoir de carburant quand la trappe d'accès à la prise électrique pour la charge est ouverte et vice versa. A cet effet, les trappes présentent des éléments de détection de leur ouverture et des éléments de maintien en position fermée de la trappe qui n'est pas ouverte. La mise en oeuvre de cette solution implique donc le montage de différents dispositifs mécaniques, électriques et capteurs, ce qui en augmente le coût, les risques de panne et une consommation électrique supplémentaire. Il existe donc un besoin pour une solution plus simple et plus économique.

Le document JP2008-162543 propose une trappe unique d'accès au réservoir de carburant et à la prise de recharge en énergie électrique. La prise de recharge électrique est montée pivotante. Elle se place devant l'ouverture du réservoir pour un rechargement en énergie électrique afin d'en interdire l'accès. Alternativement, elle s'escamote pour libérer l'accès à l'ouverture du réservoir. Il est également possible de placer la prise sur le battant de la trappe d'accès au réservoir. Cette solution présente l'inconvénient d'impliquer un montage compliqué. D'autre part le montage de la prise électrique de recharge, ou socle de connexion sur un élément mobile pivotant diminue la durabilité du dispositif de recharge qui risque de se détériorer après un certain nombre d'utilisations.

Le document JP2010-208529 propose de simplement disposer le socle de connexion à une source d'énergie électrique et le goulot du réservoir de carburant côte à côte selon deux plans non parallèles si bien que la connexion de l'un interdise l'utilisation de l'autre par encombrement. Cette solution présente l'inconvénient de modifier les données d'accessibilités du goulot du réservoir ou du socle de connexion qui se trouvent être placés dans un logement plus profond dans la carrosserie que dans les configurations habituelles. En effet les parois dudit logement s'enfoncent en direction l'une de l'autre vers l'intérieur du véhicule afin d'obtenir l'angle désiré. En cherchant à interdire l'emploi en simultané d'une prise mobile et d'un pistolet de distribution de carburant, cette solution modifie donc les conditions d'accès au socle de connexion et au goulot du réservoir depuis l'extérieur du véhicule. Ceci peut générer un certain inconfort pour l'utilisateur lors du raccordement de la prise au socle ou du remplissage du réservoir. Par ailleurs, il est nécessaire d'ajouter un battant entre le goulot et la prise si on souhaite protéger la prise de recharge électrique ou socle de connexion, d'éventuelles projections de carburant.

L'invention a pour objectif de palier les inconvénients de l'art antérieur en proposant un nouveau véhicule hybride présentant des moyens pour dissuader ou empêcher la recharge en simultané de carburant et d'énergie électrique et qui ne présente pas les inconvénients de l'art antérieur.

A cet effet l'invention propose un véhicule hybride comprenant un moteur thermique associé à un réservoir de carburant présentant un goulot pour son remplissage, un moteur électrique associé à une batterie reliée à un socle de connexion pour sa recharge en énergie électrique par raccordement avec une prise mobile, ledit goulot (6) de réservoir et ledit socle de connexion étant chacun accessible depuis l'extérieur du véhicule au moyen de deux trappes d'accès distinctes, le véhicule étant **caractérisé en ce que** les trappes d'accès au goulot du réservoir et au socle de connexion sont disposées adjacentes l'une à l'autre, de façon qu'un moyen mécanique de blocage solidaire de la trappe lors de son ouverture provoque le blocage de l'autre trappe afin d'empêcher son ouverture et inversement.

Selon un mode de réalisation préféré de l'invention, les trappes d'accès au goulot du réservoir et au socle de connexion sont disposées adjacentes l'une à l'autre, et s'ouvrent dans le même sens de façon qu'un moyen mécanique de blocage solidaire de la trappe lors de son ouverture provoque le blocage de l'autre trappe.

Selon un autre mode de réalisation de l'invention, les trappes d'accès au goulot du réservoir et au socle de connexion sont disposées adjacentes l'une à l'autre et sont en ouvertures inversées de façon qu'un moyen mécanique solidaire de la trappe lors de son ouverture provoque le blocage de l'autre trappe.

De préférence, le moyen mécanique de blocage de la trappe est une targette et en ce que la targette comprend une languette liée à la trappe est fixée en saillie radiale sur l'extrémité de l'axe placé à proximité de la trappe adjacente, la languette liée à la trappe est fixée à angle droit, sur l'axe de la trappe.

De manière optionnelle, la trappe comporte une gâche, et en ce que la gâche est placée à l'arrière de la trappe à proximité de l'axe de rotation et en bordure de la jonction des trappes.

Avantageusement, l'axe tubulaire de la trappe est monté sur l'axe commun des trappes et comporte des échancrures, et en ce que l'axe tubulaire est mobile axialement, sous la poussée d'un ressort de compression, lors de l'ouverture d'une trappe, en direction de l'autre trappe.

Préférentiellement, les trappes étant fermées, les languettes des trappes sont sensiblement perpendiculaires à la surface des trappes.

De préférence, une trappe étant ouverte, les languettes sont perpendiculaires entre elles, la languette de la trappe ouverte venant en prise dans la gâche de la trappe adjacente et empêchant mécaniquement son ouverture.

Avantageusement, la languette est fixée sur la charnière de la trappe, et en ce que la languette est fixée à angle droit, sur la charnière de la trappe, par l'intermédiaire d'un support en équerre, fixé en prolongement de la charnière en direction de la trappe adjacente, la surface du support opposée à celle sur laquelle est fixée la languette constituant une surface de contact.

De façon avantageuse, la languette à son axe médian horizontal située dans le plan situé à la jonction des deux trappes, et en ce que la face de la languette est positionnée à 90 degrés par rapport à la surface de la trappe.
Selon une variante la languette a son extrémité terminale en équerre et forme une surface de contact.

Selon une autre variante, les trappes étant fermées, les faces des languettes des trappes sont parallèles entre elles.

Avantageusement, une trappe étant ouverte, les faces des languettes sont perpendiculaires entre elles, la surface de contact de la languette de la trappe ouverte se trouvant en regard de la surface de contact du support empêchant mécaniquement l'ouverture de la trappe adjacente.

Eventuellement, les trappes d'accès au goulot du réservoir et/ou au socle de connexion présentent des moyens de fermeture/ouverture de préférence sous forme de loquet électromagnétique, pouvant être commandées depuis le tableau de bord du véhicule. De préférence, les moyens de fermeture/ouverture des trappes d'accès sont configurés pour ne permettre l'ouverture que d'une seule trappe à la fois.

On aura compris, à la lecture de la définition qui vient d'en être donnée, que la mise en oeuvre de l'invention consiste à agencer de manière adjacente les trappes d'accès au socle de connexion pour la recharge en énergie électrique et au goulot du réservoir de carburant afin que l'ouverture d'une trappe empêche l'ouverture de l'autre, afin d'éviter tous risques d'incidents qui pourraient résulter de l'ouverture simultanée des trappes, permettant l'accès au socle de connexion et au goulot du réservoir de carburant.

L'invention sera bien comprise et d'autres aspects et avantages apparaîtront clairement à la lecture de la description qui suit donnée à titre d'exemple par rapport aux figures annexées sur lesquelles :

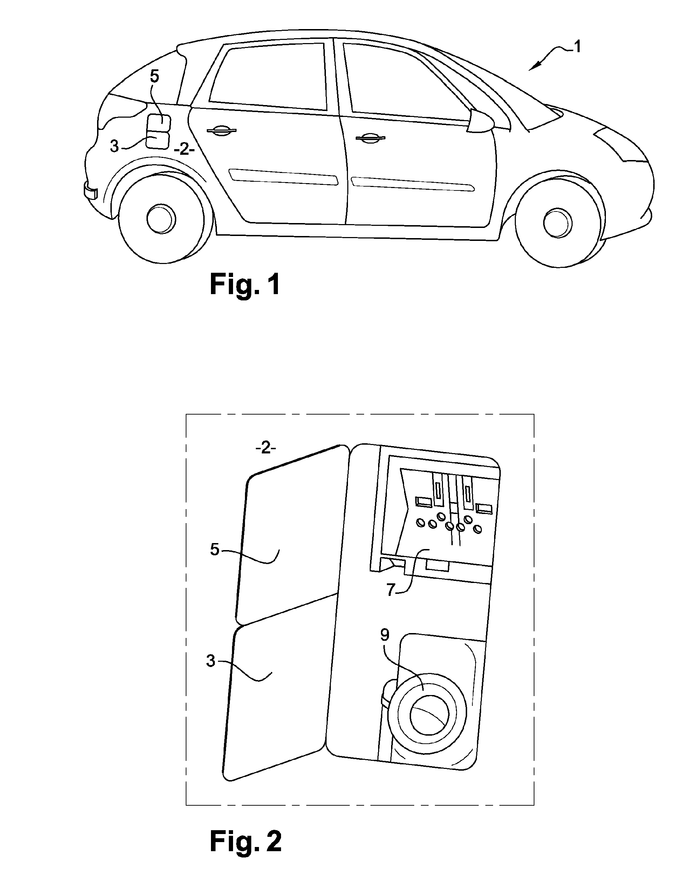

- la figure 1 présente une vue générale d'un véhicule montrant un exemple d'implantation des trappes d'accès,
- la figure 2 illustre un exemple d'agencement selon l'invention d'un socle de connexion et d'un goulot de réservoir,

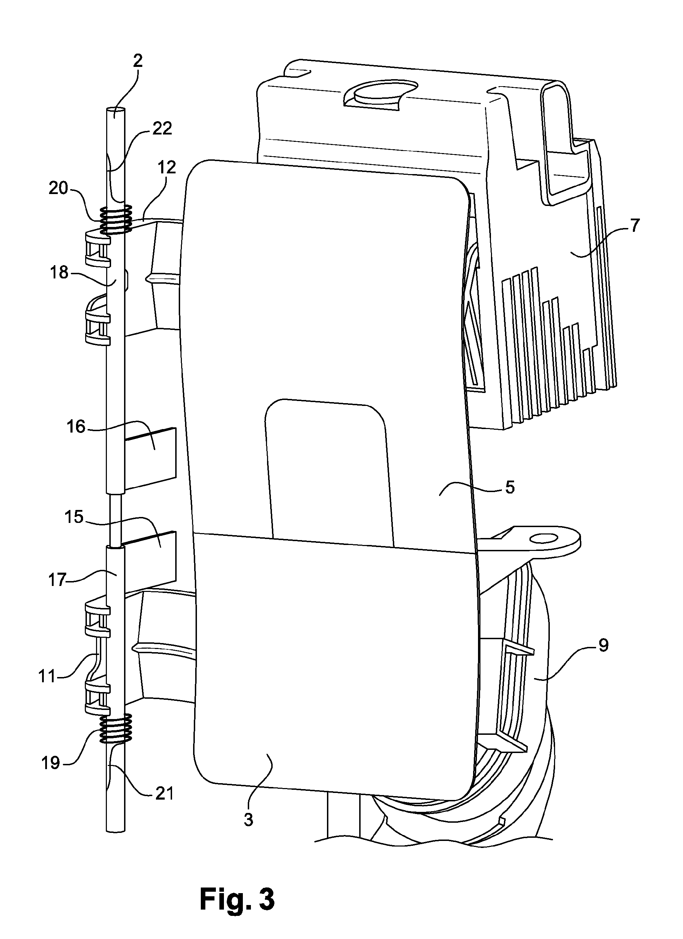

- la figure 3 montre une vue en perspective de l'extérieur du véhicule dépouillé de la carrosserie, les trappes fermées et l'implantation du socle de raccordement électrique et le goulot du conduit de remplissage en carburant du réservoir, équipé suivant l'invention, de moyens de blocages sélectifs de l'ouverture d'une trappe.

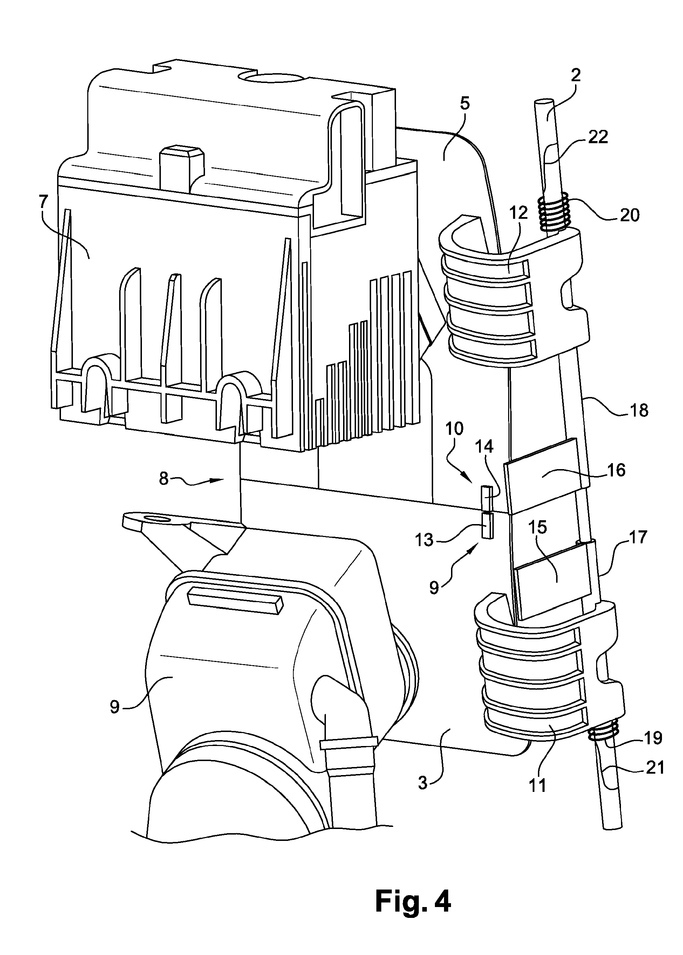

- la figure 4 montre une vue en perspective de l'intérieur de du véhicule dépouillé de la carrosserie, les trappes fermées et l'implantation du socle de raccordement électrique et le goulot du conduit de remplissage en carburant du réservoir, équipé suivant l'invention, de moyens de blocages sélectifs de l'ouverture d'une trappe.

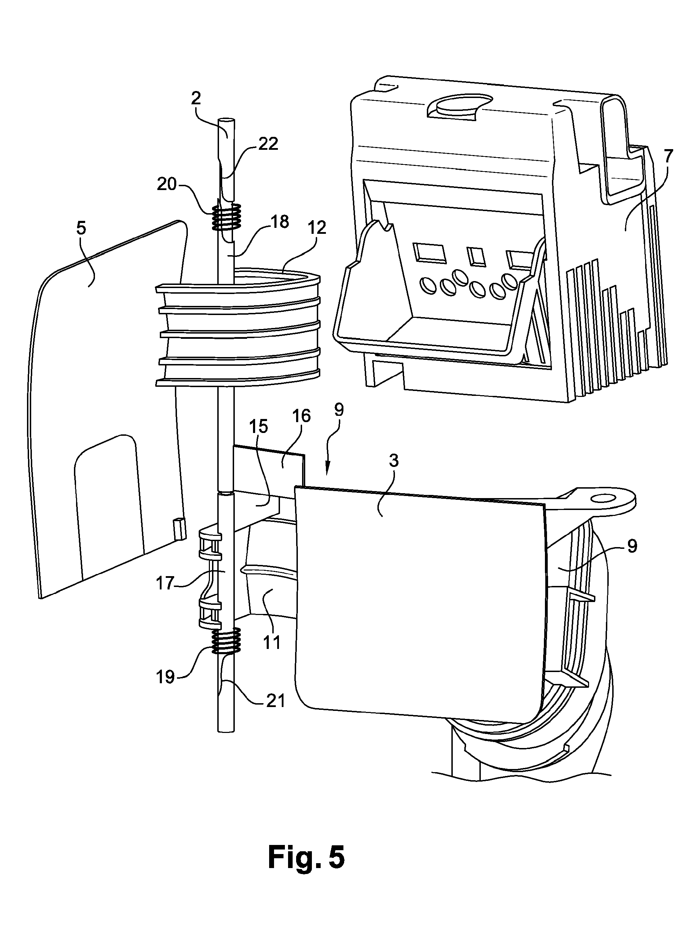

- la figure 5 montre une vue en perspective de l'extérieur de du véhicule dépouillé de la carrosserie, la trappe fournissant l'accès au goulot du conduit de remplissage en carburant du réservoir en position fermée et la trappe fournissant l'accès au socle de raccordement électrique, en position ouverte et bloquant l'ouverture de la trappe d'accès au goulot du conduit de remplissage en carburant du réservoir, suivant l'invention.

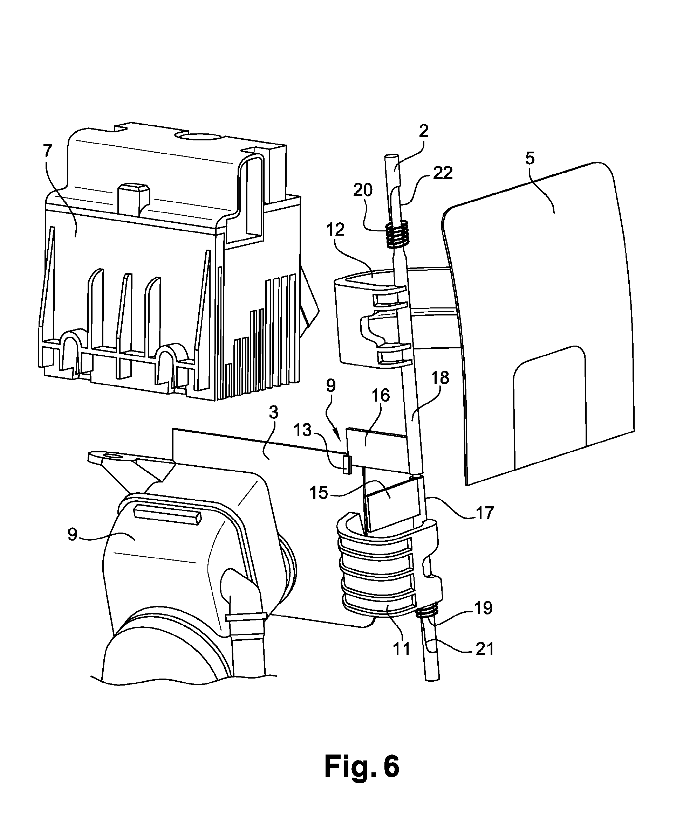

- la figure 6 montre une vue en perspective de l'intérieur de du véhicule dépouillé de la carrosserie, la trappe fournissant l'accès au goulot du conduit de remplissage en carburant du réservoir en position fermée et la trappe fournissant l'accès au socle de raccordement électrique, en position ouverte et bloquant l'ouverture de la trappe d'accès au goulot du conduit de remplissage en carburant du réservoir suivant l'invention, de moyens de blocages sélectifs de l'ouverture d'une trappe.

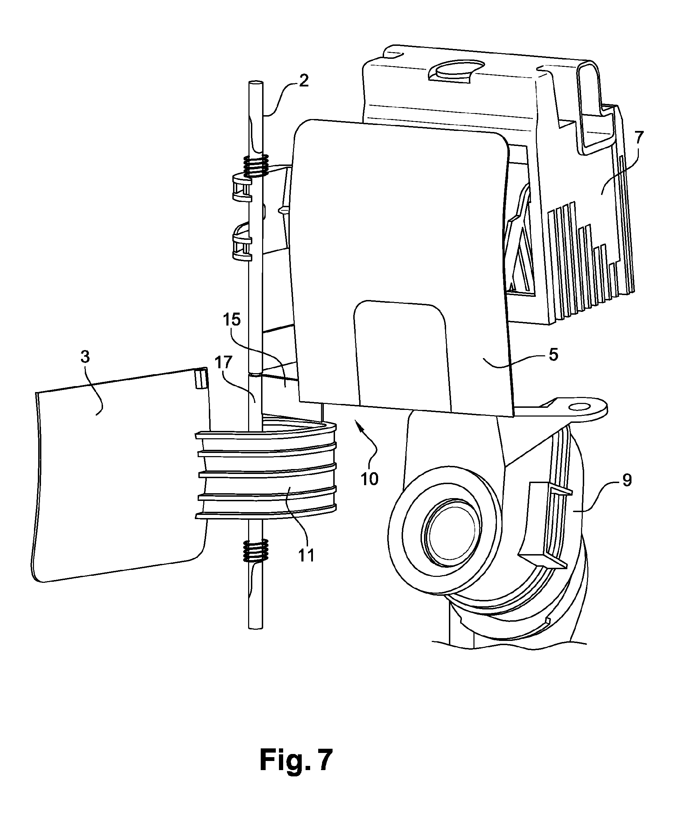

- la figure 7 montre une vue en perspective de l'extérieur de du véhicule dépouillé de la carrosserie, la trappe fournissant l'accès au socle de raccordement électrique en position fermée et la trappe fournissant l'accès au goulot du conduit de remplissage en carburant du réservoir, en position ouverte et bloquant l'ouverture de la trappe d'accès au socle de raccordement électrique suivant l'invention.

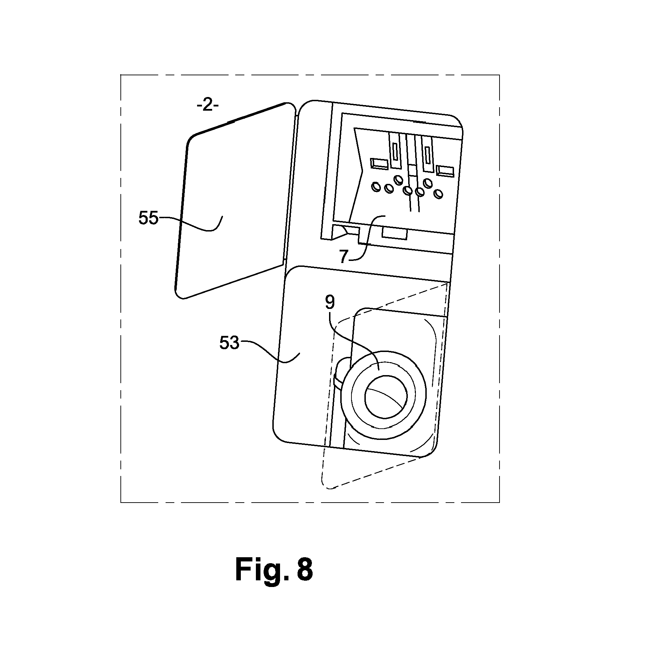

- la figure 8 illustre une variante de l'invention en montrant un agencement d'un socle de connexion et d'un goulot de réservoir, à ouvertures inversées.

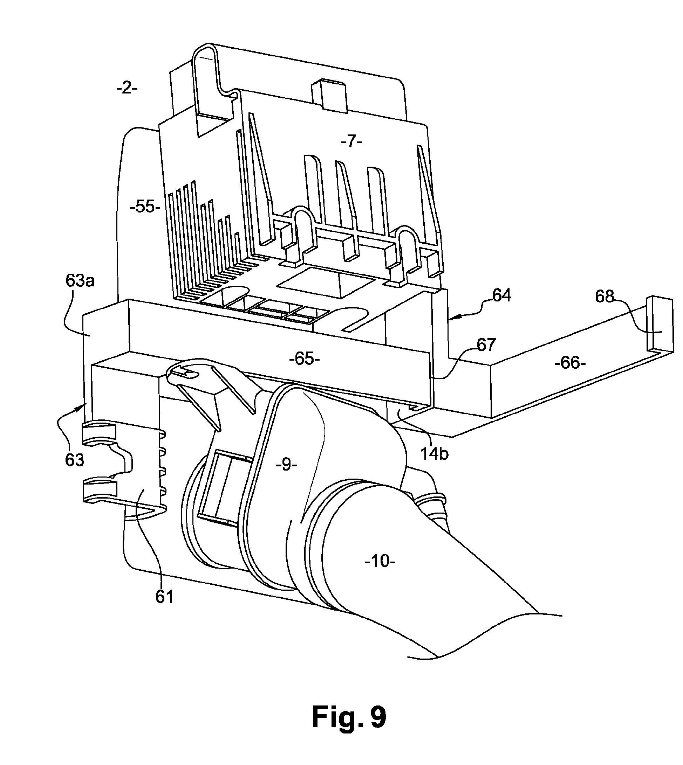

- la figure 9 montre une vue de la variante en perspective de l'intérieur de la carrosserie du véhicule les trappes fermées et l'implantation du socle de raccordement électrique et le goulot du conduit de remplissage en carburant du réservoir, équipé suivant l'invention.

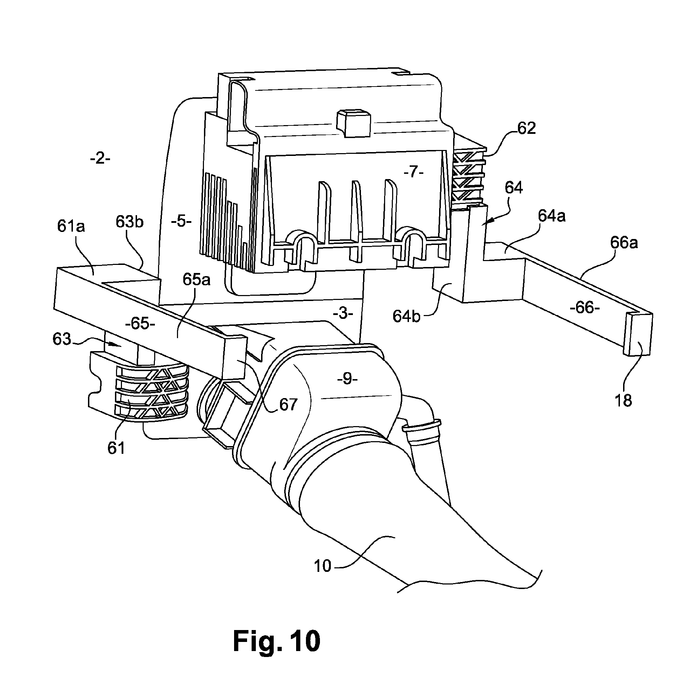

- la figure 10 montre une vue de la variante en perspective de l'intérieur de la carrosserie du véhicule la trappe fournissant l'accès au socle de raccordement électrique, en position fermée et la trappe fournissant l'accès au goulot du conduit de remplissage en carburant du réservoir, en position ouverte et bloquant l'ouverture de la trappe d'accès au socle de raccordement électrique suivant l'invention.

On se référera en premier lieu à la figure 1 montrant un véhicule hybride 1 selon l'invention. Ce véhicule 1 présente de manière connue un moteur thermique alimenté en carburant par un réservoir. Une première trappe d'accès 3 permet d'accéder depuis l'extérieur au goulot 6 dudit réservoir en vue de son remplissage. Il présente également un moteur électrique alimenté en énergie électrique par une batterie. Une seconde trappe d'accès 5 permet d'accéder depuis l'extérieur du véhicule au socle de connexion associé à ladite batterie pour sa recharge en énergie électrique. Comme on peut le voir sur la figure 1, les deux trappes d'accès 3, 5 sont implantées sur la carrosserie 2 du véhicule et disposées adjacentes l'une par rapport à l'autre. De préférence, les trappes d'accès 3, 5 dudit socle de connexion et dudit goulot sont contigües et forment une trappe double donnant accès sur un logement commun où sont disposés à la fois le socle de connexion et le goulot de remplissage du réservoir.

Selon l'invention illustrée à la figure 2, les trappes 3, 5 sont agencées pour être l'une au-dessus de l'autre. Les trappes 3, 5 d'accessibilité au socle de connexion 7 et au goulot 6 du réservoir de carburant sont donc distinctes l'une de l'autre. Si bien qu'il est possible d'avoir un accès uniquement au socle de connexion 7 ou au goulot 6 du réservoir de carburant. Lorsque les trappes 3, 5 sont disposées l'une au-dessus de l'autre, l'homme du métier aura avantage à ce que la trappe d'accès 5 au socle de connexion 7 pour la recharge en énergie électrique soit disposée au-dessus de la trappe d'accès 3 au goulot 6 du réservoir de carburant. Cette disposition permet de minimiser le risque de projection de carburant sur le socle de connexion 7.

Le socle de connexion 7 est destiné à recevoir une prise électrique mobile mâle reliée à un câble d'alimentation. La prise électrique est reliée par son câble à une source d'alimentation et sa connexion sur le socle 7, ou prise femelle, permet de recharger la batterie du véhicule. Il existe plusieurs types de connecteurs électriques pouvant être utilisés dans le cadre de l'invention. L'invention s'adresse aux véhicules hybrides dont la prise mobile électrique nécessite d'être orientée d'une manière spécifique dans le socle 7 en vue de sa connexion. L'invention consiste à tirer partie de cette orientation spécifique pour utiliser la prise électrique comme instrument de blocage de la trappe d'accès 3 au réservoir de carburant et/ou comme élément d'obturation du goulot 6 dudit réservoir.

la figure 3 montre une vue en perspective de l'extérieur du véhicule dépouillé de la carrosserie, les trappes 3, 5 fermées et l'implantation du socle 7 de raccordement électrique et le goulot 6 du conduit de remplissage en carburant du réservoir, équipé suivant l'invention, de moyens 9, 10 de blocages sélectifs de l'ouverture d'une trappe 3, 5. Chacune des trappes 3, 5 est fixée sur une charnière 11, 12 elle-même fixée sur un axe tubulaire 17, 18, monté rotatif sur un axe 2 commun aux trappes 3, 5. Les trappes 3, 5 s'ouvrent donc dans le même sens. Une languette 15, 16 liée à la trappe 3, 5 est fixée en saillie radiale sur l'extrémité de l'axe 17, 18 placé à proximité de la trappe 3, 5 adjacente. Quand les trappes 3, 5 sont fermées, les languettes 15, 16 et les axes 17, 18, tubulaires sont éloignées l'un de l'autre, en regard de leur trappe 3, 5. Lorsque la trappe 3, 5 est manoeuvrée pour l'ouvrir, l'action du ressort 19, 20 agit sur l'axe tubulaire 17, 18 de manière à le déplacer en translation axial en direction de la trappe adjacente 3, 5. Une échancrure 21, 22 est ménagée à l'extrémité de l'axe 17, 18 tubulaire à l'opposé de la jonction des trappes 3, 5. Cette échancrure 21, 22 en forme de S a pour objet de guider le mouvement de l'axe 17, 18 lors de sa rotation, en translation de manière à amener la languette 15, 16 de la trappe 3, 5 ouverte dans une position sensiblement parallèle à la surface de la trappe 3, 5 adjacente. Une échancrure correspondante est réalisée à chacune des extrémités sur l'axe 2, le diamètre extérieur est à ce niveau identique au diamètre de l'axe 17, 18 tubulaires. Un point dur permet de bloquer la trappe 3, 5 dans sa position ouverte. Lorsque la trappe 3, 5 est complètement ouverte, une portion de l'extrémité de la languette 15, 16 se trouve en regard de la face de la trappe 3, 5 adjacente. A cet effet, L'échancrure 21, 22 est dimensionnée en conséquence, car l'échancrure permet de contrôler le mouvement en translation suivant la rotation de la trappe 3, 5.

la figure 4 montre une vue en perspective de l'intérieur de du véhicule dépouillé de la carrosserie, les trappes 3, 5 fermées et l'implantation du socle 7 de raccordement électrique et le goulot 6 du conduit de remplissage en carburant du réservoir, équipé suivant l'invention, de moyens 9, 10 de blocages sélectifs de l'ouverture d'une trappe 3, 5. Les trappes 3, 5 étant fermées, les languettes 15, 16 des axes 17, 18 tubulaires recevant les charnières 11, 12 sont éloignées l'une de l'autre et également de la jonction 8 entre les trappes 3, 5. La partie de coin des trappes 3, 5 située près de la jonction 8 et de l'axe 17, 18 tubulaire reçoit une pièce fixée sur la trappe 3, 5 une gâche 9, 10 susceptible de recevoir comme cela décrit plus loin, la bordure d'une languette 15, 16 formant un pêne, constituant les moyens de blocage 9, 10 sélectifs d'une trappe 3, 5 lors de l'ouverture de la trappe 3, 5 adjacente.

la figure 5 montre une vue en perspective de l'extérieur de du véhicule dépouillé de la carrosserie, la trappe 3, 5 fournissant l'accès au goulot 6 du conduit de remplissage en carburant du réservoir en position fermée et la trappe 3, 5 fournissant l'accès au socle 7 de raccordement électrique, en position ouverte et bloquant l'ouverture de la trappe 3, 5 d'accès au goulot 6 du conduit de remplissage en carburant du réservoir suivant l'invention. La trappe 5 étant ouverte, mécaniquement la languette 16 dont la bordure forme un pêne, montée sur l'axe 18 tubulaire, recevant la charnière 12, sur laquelle a été fixée la trappe 5 est enclenchée dans la gâche 13 (non visible) de la trappe 3 adjacente. Dans cette configuration, le moyen de blocage de l'ouverture de la trappe 3, constitué de la gâche 13 et du pêne 16 forme avantageusement une targette 9.

la figure 6 montre une vue en perspective de l'intérieur de du véhicule dépouillé de la carrosserie, la trappe 3 fournissant l'accès au goulot 6 du conduit de remplissage en carburant du réservoir en position fermée et la trappe 5 fournissant l'accès au socle 7 de raccordement électrique, en position ouverte et bloquant l'ouverture de la trappe 3 d'accès au goulot 6 du conduit de remplissage en carburant du réservoir suivant l'invention, de moyens 9 de blocages sélectifs de l'ouverture d'une trappe 3. La trappe 5 étant ouverte, mécaniquement la languette 16 dont la bordure forme un pêne, montée sur l'axe 18 tubulaire, recevant la charnière 12, sur laquelle a été fixée la trappe 5 est enclenchée dans la gâche 13. Sur la vue, on comprend que le déplacement axial de la languette constitue un pêne 16 qui vient s'enclencher dans la gâche 13 formant une targette 9, bloquant la possibilité d'ouvrir la trappe 3 lorsque la trappe 5 d'accès au socle 7 de raccordement électrique est ouverte.

la figure 7 montre une vue en perspective de l'extérieur de du véhicule dépouillé de la carrosserie, la trappe 5 fournissant l'accès au socle 7 de raccordement électrique en position fermée et la trappe 3 fournissant l'accès au goulot 6 du conduit de remplissage en carburant du réservoir, en position ouverte et bloquant l'ouverture de la trappe 5 d'accès au socle 7 de raccordement électrique suivant l'invention. La trappe 3 étant ouverte, mécaniquement la languette 15 dont la bordure forme un pêne, montée sur l'axe 17 tubulaire, recevant la charnière 11, sur laquelle a été fixée la trappe 3 est enclenchée dans la gâche 14 (non visible) de la trappe 5 adjacente. Dans cette configuration, le moyen de blocage de l'ouverture de la trappe 5, constitué de la gâche 14 et du pêne 15 forme avantageusement une targette 10. On comprend bien que les mécanismes décrits pour le fonctionnement sélectif des trappes 3, 5 sont identiques et symétriques, ce qui permet de faciliter la fabrication et le montage des différentes pièces constituant les moyens mécaniques de blocage 9, 10 ou targettes des trappes 3,5.

Selon une variante de l'invention illustrée à la figure 8, les trappes 53, 55 sont agencées pour être l'une au-dessus de l'autre. Les trappes 53, 55 d'accessibilité au socle de connexion 7 et au goulot 9 du réservoir de carburant sont donc distinctes l'une de l'autre. Si bien qu'il est possible d'avoir un accès uniquement au socle de connexion 7 ou au goulot 9 du réservoir de carburant. Lorsque les trappes 53, 55 sont disposées l'une au-dessus de l'autre, à ouverture inversées, l'homme du métier aura avantage à ce que la trappe d'accès 5 au socle de connexion 7 pour la recharge en énergie électrique soit disposée au-dessus de la trappe d'accès 3 au goulot 9 du réservoir de carburant. Cette disposition permet de minimiser le risque de projection de carburant sur le socle de connexion 7.

Le socle de connexion 7 est destiné à recevoir une prise électrique mobile mâle reliée à un câble d'alimentation. La prise électrique est reliée par son câble à une source d'alimentation et sa connexion sur le socle 7, ou prise femelle, permet de recharger la batterie du véhicule. Il existe plusieurs types de connecteurs électriques pouvant être utilisés dans le cadre de l'invention. L'invention s'adresse aux véhicules hybrides dont la prise mobile électrique nécessite d'être orientée d'une manière spécifique dans le socle 7 en vue de sa connexion. L'invention consiste à tirer partie de cette orientation spécifique pour utiliser la prise électrique comme instrument de blocage de la trappe d'accès 3 au réservoir de carburant et/ou comme élément d'obturation du goulot 9 dudit réservoir.

La figure 9 montre une vue de la variante en perspective de l'intérieur de la carrosserie 2 du véhicule, les trappes 3, 5 d'accès fermées et l'implantation du socle 7 de raccordement électrique et le goulot 9 du conduit 10 de remplissage en carburant du réservoir, équipé suivant l'invention. Sur la figure, on voit les charnières 61, 62 des trappes 53, 55 montées de façon antagonistes afin que les trappes 53, 55 s'ouvrent en sens inverse. A l'extrémité des charnières 61, 62, en direction de la jonction entre les deux trappes 53, 55, des supports 63, 64 sont fixés. Ces supports 63,64 sont donc montés sur les charnières 61, 62 et sont liés au mouvement de rotation des charnières 61, 62 lors de l'ouverture des trappes 53, 55. Les supports 63, 64 sont en forme d'équerre 63a, 64a de manière que les branches soit au même niveau et orientées à l'opposée l'une de l'autre. L'extrémité des équerres reçoit des languettes 65, 66 dont l'axe longitudinal médian est dans le plan de jonction des trappes 53, 55. Les extrémités des languettes 65, 66 se termine en équerre permettant de créer une surface de contact 67, 68. Dans cette configuration où les trappes 53, 55 sont fermées, les faces 65a, 66a des languettes 65, 66 sont parallèles entre elles. Les extrémités 63b, 64b des supports 63, 64 opposées aux extrémités des équerres 63a, 64a forme une surface de contact.

La figure 10 montre une vue de la variante en perspective de l'intérieur de la carrosserie 2 du véhicule, la trappe 55 fournissant l'accès au socle 7 de raccordement électrique, en position fermée et la trappe 3 fournissant l'accès au goulot 9 du conduit de remplissage en carburant du réservoir, en position ouverte et bloquant l'ouverture de la trappe 55 d'accès au socle 7 de raccordement électrique, suivant l'invention. Sur cette vue, la trappe 53 (non visible) permettant l'accès au goulot 9 de rechargement en carburant est ouverte, tandis que la trappe 55 permettant l'accès au socle 7 permettant la connexion d'une prise mobile depuis l'extérieur du véhicule est fermée et son ouverture n'est pas possible mécaniquement. En effet, lors de l'ouverture de la trappe 53, la rotation de la charnière 61, a entraîné la rotation du support 63 et également de la languette 65 d'une rotation angulaire de 90 degrés. Ce mouvement de rotation a pour effet de placer la surface de contact 67 de la languette 65 lié à la trappe 53, en regard de la surface de contact 64b du support 64 fixé sur la charnière 62 (non visible) permettant la rotation de la trappe 55. Un jeu fonctionnel est prévu entre les surfaces de contact 64b, 67 de manière à réaliser successivement et alternativement l'ouverture des trappes 53, 55 sans frottement mécanique. Dans cette configuration où une trappe 53, 55 est ouverte, les faces 65a, 66a des languettes 65, 66 sont perpendiculaires entre elles. On comprend que lorsque la trappe 53 de rechargement en carburant est ouverte, l'ouverture de la trappe 55 d'accès au socle de la prise électrique est impossible car la rotation de la charnière 62 de la trappe 55, entraîne la rotation du support 64 dont la surface 64b vient en contact positif sur la surface 67 et n'autorisant la rotation de la charnière 62 et par conséquent l'ouverture de la trappe 55. Les deux mécanismes d'ouvertures des trappes 53, 55 étant rigoureusement identiques mais à ouvertures inversées, l'ouverture d'une trappe 53, 55 implique que l'autre trappe 53, 55 adjacente à son ouverture bloquée.

## Revendications

1. Véhicule hybride (1) comprenant un moteur thermique associé à un réservoir de carburant présentant un goulot (6) pour son remplissage, un moteur électrique associé à une batterie reliée à un socle de connexion (7) pour sa recharge en énergie électrique par raccordement avec une prise mobile, ledit goulot (6) de réservoir et ledit socle de connexion (7) étant chacun accessible depuis l'extérieur du véhicule (1) au moyen de deux trappes (3, 5) d'accès distinctes, le véhicule (1) étant **caractérisé en ce que** les trappes (3) (5) (53) (55)d'accès au goulot (6) du réservoir et au socle de connexion (7) sont disposées adjacentes l'une à l'autre, de façon qu'un moyen mécanique (9) (10) de blocage solidaire de la trappe (3) (5) lors de son ouverture provoque le blocage de l'autre trappe (3) (5) afin d'empêcher son ouverture et inversement.

2. Véhicule hybride (1) selon la revendication 1 **caractérisé en ce que** les trappes (3) (5) d'accès au goulot (6) du réservoir et au socle de connexion (7) sont disposées adjacentes l'une à l'autre, et s'ouvrent dans le même sens de façon qu'un moyen mécanique (9) (10) de blocage solidaire de la trappe (3) (5) lors de son ouverture provoque le blocage de l'autre trappe (3) (5).

3. Véhicule hybride (1) selon la revendication 1 **caractérisé en ce que** les trappes (53) (55) d'accès au goulot (9) du réservoir et au socle de connexion (7) sont disposées adjacentes l'une à l'autre et sont en ouvertures inversées de façon qu'un moyen mécanique (15, 16) solidaire de la trappe (53) (55) lors de son ouverture provoque le blocage de l'autre trappe (53) (55).

4. Véhicule hybride (1) selon la revendication 1 ou 2 **caractérisé en ce que** le moyen mécanique (9) (10) de blocage de la trappe (3) (5) est une targette et **en ce que** la targette (9) (10) comprend une languette (15) (16) liée à la trappe (3) (5) est fixée en saillie radiale sur l'extrémité de l'axe (17) (18) placé à proximité de la trappe (3) (5) adjacente, la languette (15) (16) liée à la trappe (3) (5) est fixée à angle droit, sur l'axe (17) (18) de la trappe (3) (5).

5. Véhicule hybride selon l'une quelconque des revendications 1 ou 2 et 4, **caractérisé en ce que** la trappe (3) (5) comporte une gâche (13) (14), et **en ce que** la gâche (13) (14) est placée à l'arrière de la trappe (3) (5) à proximité de l'axe de rotation et en bordure de la jonction des trappes (3) (5).

6. Véhicule hybride (1) selon l'une quelconque des revendications 1 ou 2, 4, 5, **caractérisé en ce que** l'axe tubulaire (17) (18) de la trappe (3) (5) est monté sur l'axe commun des trappes (3) (5) et comporte des échancrures (21) (22),et **en ce que** l'axe tubulaire (17) (18) est mobile axialement, sous la poussée d'un ressort (19) (20) de compression, lors de l'ouverture d'une trappe (3) (5), en direction de l'autre trappe (3) (5).

7. Véhicule hybride (1) selon l'une quelconque des revendications 1 ou 2, 4 à 6, **caractérisé en ce que** les trappes (3, 5) étant fermées, les languettes (15, 16) des trappes (3, 5) sont sensiblement perpendiculaires à la surface des trappes (3, 5).

8. Véhicule hybride (1) selon l'une quelconque des revendications 1 ou 2, 4 à 7, **caractérisé en ce qu'**une trappe (3) (5) étant ouverte, les languettes (15) (16) sont perpendiculaires entre elles, la languette (15, 16) de la trappe (3) (5) ouverte venant en prise dans la gâche (13) (14) de la trappe (3) (5) adjacente et empêchant mécaniquement son ouverture.

9. Véhicule hybride (1) selon la revendication 1 ou 3 **caractérisé en ce que** la languette (65) (66) est fixée sur la charnière de la trappe (53) (55), et **en ce que** la languette (65) (66) est fixée à angle droit, sur la charnière (61) (62) de la trappe (53) (55), par l'intermédiaire d'un support (63, 64) en équerre, fixé en prolongement de la charnière (61) (62) en direction de la trappe adjacente (53) (55), la surface du support (63) (64) opposée à celle sur laquelle est fixée la languette (65) (66) constituant une surface de contact.

10. Véhicule hybride (1) selon l'une quelconque des revendications 1 ou 3 et 9, **caractérisé en ce que** la languette (65) (66) à son axe médian horizontal située dans le plan situé à la jonction des deux trappes (53) (55), et **en ce que** la face de la languette (65) (66) est positionnée à 90 degrés par rapport à la surface de la trappe (53) (55).

11. Véhicule hybride (1) selon l'une quelconque des revendications 1 ou 3 et 9, 10, **caractérisé en ce que** la languette (65) (66) a son extrémité terminale en équerre et forme une surface de contact (67) (18).

12. Véhicule hybride (1) selon l'une quelconque des revendications 1 ou 3, 9 à 11, **caractérisé en ce que** les trappes (53) (55) étant fermées, les faces (65a) (66a) des languettes (65) (66) des trappes (53) (55) sont parallèles entre elles.

13. Véhicule hybride (1) selon l'une quelconque des revendications 1 ou 3, 9 à 12, **caractérisé en ce qu'**une trappe (53) (55) étant ouverte, les faces (65a) (66a) des languettes (65) (66) sont perpendiculaires entre elles, la surface de contact (67) (68) de la languette (65) (66) de la trappe (53) (55) ouverte se trouvant en regard de la surface de contact (63b) (64b) du support (63) (64), empêchant mécaniquement l'ouverture de la trappe (53) (55) adjacente.

14. Véhicule hybride (1) selon l'une des revendications précédentes, **caractérisé en ce que** les trappes (3) (5) (53) (55) d'accès au goulot (6) du réservoir et/ou au socle de connexion (7) présentent chacune des moyens de fermeture/ouverture de préférence sous forme de loquet électromagnétique, pouvant être commandés depuis le tableau de bord du véhicule.
